# EUROPÄISCHE PATENTSCHRIFT

(11) **EP 2 927 500 B1**
(45) Veröffentlichungstag und Bekanntmachung des Hinweises auf die Patenterteilung: **06.05.2020**
(21) Anmeldenummer: 15158486.9
(22) Anmeldetag: 10.03.2015
(51) Int. Cl.: F04C 29/02, F16N 17/06, F16N 7/40, F16C 33/66, F16N 13/16, F16N 13/00

(54) **VERFAHREN UND SYSTEM ZUR VERSORGUNG EINER LAGERANORDNUNG**
SYSTEM AND METHOD FOR SUPPLYING A BEARING ASSEMBLY
PROCÉDÉ ET SYSTÈME D'ALIMENTATION D'UNE DISPOSITION DE PALIER

(30) Priorität: 03.04.2014 DE 102014104734
(43) Veröffentlichungstag der Anmeldung: 07.10.2015
(73) Patentinhaber: PFEIFFER VACUUM GMBH, 35614 Asslar (DE)
(72) Erfinder: Stammler, Herbert, 35396 Gießen (DE); Emrich, Ulrich, 35753 Greifenstein (DE)
(74) Vertreter: Manitz Finsterwald Patent- und Rechtsanwaltspartnerschaft mbB

(56) Entgegenhaltungen:
- AT-A2- 504 155
- DE-A1- 2 947 066
- FR-A- 1 105 167
- US-A- 3 489 034

## Beschreibung

Die vorliegende Erfindung betrifft ein Verfahren sowie eine Vakuumpumpe mit einem System zur Versorgung wenigstens einer der Führung gegeneinander beweglicher Bauteile dienenden Lageranordnung mit einem Betriebsmittel, insbesondere einem Schmiermittel.

Lagerungen von beispielsweise Rotoren von Pumpen wie insbesondere Vakuumpumpen müssen mit Ausnahme von berührungslosen Aktiv-Magnetlagern geschmiert werden. Dabei hat sich herausgestellt, dass eine aktive Schmierung mit Betriebsmitteln gegenüber einer passiven Fett-Dauerschmierung von Vorteil ist.

Bisher erfolgt die Förderung des Betriebs- bzw. Schmiermittels zu derartigen Lagerungen mittels aktiver Pumpen wie beispielsweise einer Schneckenwelle oder einer rotierenden Schmiermittelpumpe, was relativ aufwändig ist.

Der Erfindung liegt somit die Aufgabe zugrunde, ein Verfahren sowie eine Vakuumpumpe der eingangs genannten Art anzugeben, mit denen der Aufwand für eine möglichst optimale Betriebsmittelversorgung der Lageranordnung auf ein Minimum reduziert ist. Dabei solldas Verfahren insbesondere bei einer unter Unterdruck stehenden Vakuumpumpe einsetzbar sein.

In der AT 504 155 A2 sind ein Verfahren sowie eine Vorrichtung zum Einbringen von Schmiermittel in eine Lageranordnung beschrieben, gemäß denen ein evakuierter Vorratsraum über ein Ventil unter Vakuumbedingungen mit Schmiermittel aus einem Nachfüllbehälter nachgefüllt werden kann. Der evakuierte Vorratsraum ist über ein steuerbares Ventil mit einer druckerzeugenden Pumpe verbunden, um das Schmiermittel unter Druck zu setzen. Von der Pumpe führt eine mit einem weiteren Ventil versehene Förderleitung zu einer Befüllvorrichtung in einem die Lageranordnung enthaltenden evakuierten Arbeitsraum. Durch Öffnen des zwischen dem Vorratsraum und der Pumpe angeordneten Ventils wird eine definierte Menge an Schmiermittel in die Pumpe eingesaugt. Anschließend wird das in der Pumpe enthaltene Schmiermittel bei geschlossenem zwischen dem Vorratsraum und der Pumpe angeordnetem Ventil und geschlossenem zwischen der Pumpe und der Befüllvorrichtung angeordnetem Ventil unter Druck gesetzt. Daraufhin wird das zwischen der Pumpe und der Befüllvorrichtung angeordnete Ventil geöffnet und das in die Pumpe eingebrachte und durch diese unter Druck gesetzte Schmiermittel bei geschlossenem zwischen dem Vorratsraum und der Pumpe angeordnetem Ventil der Befüllvorrichtung unter Druck zugeführt.

In der DE 29 47 066 A1 ist eine Vorrichtung zur Schmierung des Lagers für den Rotor einer Vakuumpumpe beschrieben, bei der ein von einem Lagerraum durch das Pumpengehäuse nach außen führender Schmiermittelkanal mit einem den Lagerraum nach außen abdichtenden, in Richtung Lagerraum öffnenden Rückschlagventil versehen ist. Die äußere Mündung des Schmiermittelkanals kann mit einem Gewinde versehen sein und mittels einer Schraube verschlossen werden. Zwischen der durch die Schraube verschließbaren äußeren Mündung und dem Rückschlagventil kann der Schmiermittelkanal zur Bildung eines Fettvorratsraumes einen erweiterten Abschnitt aufweisen. Zum Nachschmieren des Lagers kann durch Hineindrehen der Schraube in den Fettvorratsraum oder mittels einer den nötigen Druck erzeugenden Fettspritze die notwendige Schmiermittelmenge von außen über das Rückschlagventil in den Lagerraum gepresst werden. Dabei ist das zwischen dem Fettvorratsraum und dem Lagerraum angeordnete Rückschlagventil so bemessen, dass es auch bei den größten auftretenden Luftdruck-Differenzen zwischen Lagerraum und Fettvorratsraum geschlossen bleibt.

In der US 3 489 034 A ist ein Getriebezug mit einem zur Reduzierung von Ventilationsverlusten evakuierten Gehäuse und in diesem gelagerten Getriebewellen beschrieben, deren Lager jeweils eine Abzugskammer für abfließendes Schmieröl aufweisen, die mit einem Atmosphärendruck ausgesetzten Sammelbehälter in Verbindung steht, aus dem die Lager durch entsprechende Fördermittel wieder mit Schmieröl versorgt werden.

In der FR 1 105 167 A ist ein Schmiersystem für eine volumetrische oder Rotationspumpe beschrieben, durch das der Pumpe über eine Pipette Öl aus einem unterhalb des Pumpengehäuses angeordneten Vorratsbehälter zuführbar ist. Damit Öl über die Pipette in die Pumpe gefördert wird, wird auf das im Vorratsbehälter enthaltene Öl Druck ausgeübt, indem durch die Pumpe verdrängte Luft aus einer der Pumpe als Schalldämpfer zugeordneten Expansionskammer durch eine Öffnung hindurch in den Vorratsbehälter geführt wird.

Diese Aufgabe wird erfindungsgemäß gelöst durch ein Verfahren mit den Merkmalen des Anspruchs 1 sowie einer Vakuumpumpe mit den Merkmalen des Anspruchs 6. Bevorzugte Ausgestaltungen des erfindungsgemäßen Verfahrens sowie bevorzugte Ausführungsformen der erfindungsgemäßen Vakuumpumpe sind in den Unteransprüchen angegeben.

Gemäß dem erfindungsgemäßen Verfahren zur Versorgung wenigstens einer der Führung gegeneinander beweglicher Bauteile dienenden Lageranordnung mit einem Betriebsmittel, insbesondere einem Schmiermittel, wird das Betriebsmittel aus einem Betriebsmittelreservoir über eine erste Ventilanordnung in wenigstens einen darunter angeordneten abgeschlossenen Behälter geleitet, der abgeschlossene Behälter über einen Förderkanal mit der Lageranordnung verbunden und dem abgeschlossenen Behälter über eine zweite Ventilanordnung extern beaufschlagtes Gas und/oder Umgebungsluft zugeführt, um Betriebsmittel aus dem abgeschlossenen Behälter über den Förderkanal unterstützt durch den Differenzdruck zwischen dem dem Behälter zugeführten Gas bzw. Umgebungsluft und einem unter Unterdruck stehenden lagerseitigen Mündungsbereich des Förderkanals zu der Lageranordnung zu fördern, wobei mit den Betriebsmitteln eine Lageranordnung einer unter Unterdruck stehenden Vakuumpumpe versorgt wird.

Unter dem Begriff "Unterdruck" ist generell ein Druck in einem Bereich zu verstehen, der kleiner ist als der Umgebungsdruck, also der Druck in einer Umgebung dieses Bereiches. Der Umgebungsdruck ist insbesondere der am jeweiligen Ort herrschende atmosphärische Druck, d.h. der Luftdruck der Atmosphäre oder der Umgebungsluft. Insbesondere dann, wenn im Folgenden von einer Einrichtung wie einer Pumpe oder Vakuumpumpe die Rede ist, dann ist mit "Unterdruck" ein Druck gemeint, der kleiner ist als der atmosphärische Druck an dem Ort, an welchem sich die Einrichtung gerade befindet. Wenn allerdings z.B. die Einrichtung in einem Raum betrieben wird, in welchem der Druck bereits kleiner ist als der atmosphärische Druck, dann ist der bezüglich der Einrichtung erwähnte "Unterdruck" wiederum kleiner als der Druck in diesem die Einrichtung "umgebenden" Raum, d.h. kleiner als der "Umgebungsdruck", was wiederum konsistent ist mit der eingangs angegebenen Definition.

Ein solches Verfahren ist insbesondere zur Versorgung von Lagerungen von unter Unterdruck stehenden Vakuumpumpen geeignet. Dabei kann zur Unterstützung der Förderung des Betriebsmittels zu der Lageranordnung der Differenzdruck zwischen dem dem abgeschlossenen Behälter zugeführten extern beaufschlagten Gas bzw. Umgebungsluft und dem Unterdruck im Inneren der Vakuumpumpe genutzt werden. Durch eine derartige Nutzung pneumatischer Effekte ist die entsprechende Förderung des Betriebsmittels auch ohne aktive Pumpe gewährleistet, wodurch der Aufwand zur Versorgung der Lageranordnung entsprechend reduziert wird.

Der der Lageranordnung zugeführte Betriebsmittelstrom wird bevorzugt über die Gas- und/oder Umgebungsluftzufuhr in den abgeschlossenen Behälter gesteuert und/oder geregelt. Dabei kann die Gas- und/oder Umgebungsluftzufuhr in den abgeschlossenen Behälter insbesondere mittels eines Drosselventils eingestellt werden.

Die Ventilanordnungen können insbesondere so betätigt oder angesteuert werden, dass über die erste und die zweite Ventilanordnung abwechselnd Betriebsmittel aus dem Betriebsmittelreservoir in den darunter angeordneten abgeschlossenen Behälter geleitet und dem abgeschlossenen Behälter extern beaufschlagtes Gas und/oder Umgebungsluft zugeführt wird, um Betriebsmittel aus dem abgeschlossenen Behälter zu der Lageranordnung zu fördern.

Es kann also abwechselnd die erste und die zweite Ventilanordnung geöffnet bzw. wieder geschlossen werden, womit eine regelmäßige Versorgung der betreffenden Lageranordnung mit Betriebsmittel sichergestellt wird.

Insbesondere in dem Fall, dass das extern beaufschlagte Gas innerhalb des abgeschlossenen Behälters mit dem Betriebsmittel in Kontakt kommt, kann als Gas ein Inertgas verwendet werden.

Gemäß einer weiteren vorteilhaften Ausgestaltung des erfindungsgemäßen Verfahrens sind das Betriebsmittel und das Gas bzw. Umgebungsluft innerhalb des abgeschlossenen Behälters mittels einer Membran voneinander getrennt.

Durch eine solche Membran wird verhindert, dass das Betriebsmittel und das Gas bzw. Umgebungsluft in direkten Kontakt miteinander kommen. Es kann beispielsweise eine Well- oder Flachmembran eingesetzt werden.

Dabei ist insbesondere eine Beaufschlagung der Membran nach Art einer Membranpumpe mit zwischen dem Betriebsmittelreservoir und dem abgeschlossenen Behälter sowie im Förderkanal vorgesehenen Rückschlagventilen denkbar. Für die Zufuhr von extern beaufschlagtem Gas bzw. Umgebungsluft in den abgeschlossenen Behälter genügt im einfachsten Fall ein Ventil. Der Gas bzw. Umgebungsluft aufnehmende Bereich des abgeschlossenen Behälters ist bevorzugt über ein insbesondere einstellbares Drosselventil mit Unterdruck beaufschlagbar. Dabei kann dieses Drosselventil insbesondere so eingestellt werden, dass stets ein definierter Gasvolumenstrom aus dem abgeschlossenen Behälter austritt, der kleiner ist als der in den Behälter eintretende Volumenstrom. Damit erhöht sich der Druck auf der Gasseite der Membran, wodurch das Betriebsmittel entgegen dem Rückhaltedruck des dem Förderkanal zugeordneten Rückschlagventils in den Förderkanal gepumpt wird. Sobald das Ventil der zweiten Ventilanordnung geschlossen wird, wird der verbleibende Druck über das den abgeschlossenen Behälter mit dem Unterdruck verbindende Drosselventil abgebaut. Dabei kann die Membran allein durch deren Eigenspannung zurückbewegt und /oder durch eine Federeinrichtung wieder zurückgestellt werden. Während dieser Rückbewegung bzw. des entsprechenden Rückhubs der Membran wird erneut Betriebsmittel aus dem Betriebsmittelreservoir in den abgeschlossenen Behälter gesaugt, das dann für die nächste Pumpphase zur Verfügung steht.

Von Vorteil ist insbesondere auch, wenn das Kanalvolumen zu der zu versorgenden Lageranordnung kleiner gewählt wird als das Volumen des abgeschlossenen Behälters. Dadurch ist insbesondere sichergestellt, dass auch ein leerer Kanal vollständig durchströmt werden kann.

Bei dem Förderkanal kann es sich insbesondere um einen aufsteigenden Kanal handeln. Der abgeschlossene Behälter ist zweckmäßigerweise in einem unteren Bereich mit dem Förderkanal verbunden. Wie bereits erwähnt, kann dem Förderkanal ein Rückschlagventil zugeordnet werden. Dabei kann ein solches Rückschlagventil an beliebiger Stelle im Förderkanal angeordnet sein, wobei es zweckmäßigerweise jedoch in dessen Eintrittsbereich vorgesehen ist.

Der abgeschlossene Behälter kann zur Versorgung mehrerer Lageranordnungen auch über mehrere getrennte Förderkanäle mit verschiedenen Lageranordnungen verbunden werden. Dabei kann den verschiedenen Förderkanälen jeweils ein eigenes, insbesondere einstellbares Drosselventil zugeordnet werden, womit die Volumenflüsse unabhängig von unterschiedlichen Kanalgeometrien möglichst gleich oder in einem gewünschten Verhältnis relativ zueinander gehalten werden können. Der Betriebsmittelstrom zu den Lageranordnungen kann insbesondere auch wieder über die zweite Ventilanordnung bzw. die Gas- und/oder Umgebungsluftzufuhr eingestellt werden. Die Einstellungen können insbesondere auch noch nachträglich verändert werden.

Über die zweite Ventilanordnung kann insbesondere eine stoßweise Betriebsmittelzufuhr zu der Lageranordnung in beliebigen Abständen bewirkt werden, womit eine Überschmierung wirksam verhindert werden kann.

Die jeweilige Lageranordnung kann vorteilhafterweise auch abwechselnd über mehrere abgeschlossene Behälter mit Betriebsmittel versorgt werden. Ein solcher Einsatz mehrerer abgeschlossener Behälter ermöglicht eine kontinuierliche Betriebsmittelversorgung ohne Unterbrechung, indem die abgeschlossenen Behälter gegenläufig getaktet werden, so dass die Lageranordnung stets über wenigstens einen Behälter aktiv versorgt werden kann.

Von Vorteil ist insbesondere auch, wenn der Füllstand des abgeschlossenen Behälters über wenigstens einen Füllstandssensor überwacht wird. Ein solcher Füllstandssensor kann insbesondere zur aktiven Steuerung und/oder Regelung des Füllstandes des abgeschlossenen Behälters genutzt werden.

Von Vorteil ist zudem, wenn der Betriebsmitteldurchsatz in einem jeweiligen Förderkanal mittels wenigstens eines Durchflusssensors überwacht wird. Ein solcher Durchflusssensor kann zur Steuerung und/oder Regelung der der betreffenden Lageranordnung zugeführten Betriebsmittelmenge herangezogen werden.

Die erfindungsgemäße Vakuumpumpe, insbesondere Turbomolekularpumpe, umfasst zumindest eine im Pumpbetrieb rotierende Teile wenigstens einer Pumpstufe, insbesondere Turbopumpstufe, tragende und mittels eines Antriebs in Rotation versetzbare Rotorwelle, die durch eine wenigstens ein Wälzlager umfassende Lageranordnung drehbar gelagert ist, wobei zur Versorgung der Lageranordnung mit einem Betriebsmittel, insbesondere einem Schmiermittel, ein System mit einem Betriebsmittel, insbesondere einem Schmiermittel, umfasst entsprechend ein Betriebsmittelreservoir und wenigstens einen darunter angeordneten abgeschlossenen Behälter vorgesehen ist, dem über eine erste Ventilanordnung das Betriebsmittel aus dem Betriebsmittelreservoir zuführbar ist, wobei der abgeschlossene Behälter über einen Förderkanal mit der Lageranordnung verbunden ist und dem abgeschlossenen Behälter über eine zweite Ventilanordnung extern beaufschlagtes Gas und/oder Umgebungsluft zuführbar ist, um Betriebsmittel aus dem abgeschlossenen Behälter über den Förderkanal unterstützt durch den Differenzdruck zwischen dem dem Behälter zugeführten Gas bzw. Umgebungsluft und einem insbesondere unter Unterdruck stehenden lagerseitigen Mündungsbereich des Förderkanals zu der Lageranordnung zu fördern.

Dabei ist die Lageranordnung bevorzugt in der unter Unterdruck stehenden Vakuumpumpe enthalten.

Insbesondere umfasst die Lageranordnung wenigstens ein in der Vakuumpumpe, insbesondere Turbomolekularpumpe, integriertes Wälzlager, durch welches eine im Pumpbetrieb rotierende Teile wenigstens einer Pumpstufe, insbesondere Turbopumpstufe, tragende und mittels eines Antriebs in Rotation versetzbare Rotorwelle drehbar gelagert ist.

Der der Lageranordnung zugeführte Betriebsmittelstrom ist vorteilhafterweise über die Gas- und/oder Umgebungsluftzufuhr in den abgeschlossenen Behälter steuerbar und/oder regelbar.

Bevorzugt ist die Gas- und/oder Umgebungsluftzufuhr in den abgeschlossenen Behälter über ein Drosselventil einstellbar.

Bevorzugt sind die erste und die zweite Ventilanordnung über eine Steuereinrichtung so ansteuerbar, dass abwechselnd Betriebsmittel aus dem Betriebsmittelreservoir in den darunter angeordneten abgeschlossenen Behälter überführt und dem abgeschlossenen Behälter extern beaufschlagtes Gas und/oder Umgebungsluft zugeführt wird, um Betriebsmittel aus dem abgeschlossenen Behälter zu der Lageranordnung zu fördern.

Gemäß einer weiteren vorteilhaften Ausführungsform des erfindungsgemäßen Systems ist innerhalb des abgeschlossenen Behälters eine Membran vorgesehen, durch die das Betriebsmittel und das Gas bzw. Umgebungsluft voneinander getrennt sind. Dabei ist der mit Gas bzw. Umgebungsluft beaufschlagbare Bereich des abgeschlossenen Behälters bevorzugt über ein insbesondere einstellbares Drosselventil mit Unterdruck beaufschlagbar. Die Membran kann beispielsweise als Well- oder Flachmembran ausgeführt sein.

Es ist insbesondere eine Beaufschlagung der Membran nach Art einer Membranpumpe mit zwischen dem Betriebsmittelreservoir und dem abgeschlossenen Behälter sowie im Förderkanal vorgesehenen Rückschlagventilen denkbar. Der Gas bzw. Umgebungsluft aufnehmende Bereich des abgeschlossenen Behälters ist bevorzugt über ein insbesondere einstellbares Drosselventil mit Unterdruck beaufschlagbar. Im Anschluss an eine jeweilige Pumpphase kann die Membran allein durch deren Eigenspannung zurückbewegt und /oder durch eine Federeinrichtung wieder zurückgestellt werden.

Der Förderkanal kann insbesondere als aufsteigender Kanal ausgeführt sein. Der abgeschlossene Behälter ist zweckmäßigerweise in einem unteren Bereich mit dem Förderkanal verbunden. Wie bereits erwähnt, kann dem Förderkanal insbesondere ein Rückschlagventil zugeordnet sein.

Das Kanalvolumen zu der zu versorgenden Lageranordnung ist bevorzugt kleiner als das Volumen des abgeschlossenen Behälters.

Zur Versorgung mehrerer Lageranordnungen kann der abgeschlossene Behälter auch über mehrere getrennte Förderkanäle mit verschiedenen Lageranordnungen verbunden sein.

Die Ventilanordnungen können über eine Steuereinrichtung insbesondere so ansteuerbar sein, dass einer jeweiligen Lageranordnung Betriebsmittel abwechselnd über getrennte geschlossene Behälter zugeführt werden.

Einem jeweiligen Förderkanal ist zweckmäßigerweise ein insbesondere einstellbares Drosselventil zugeordnet. Alternativ oder zusätzlich kann einem jeweiligen Förderkanal insbesondere auch ein Rückschlagventil zugeordnet sein.

Dem Betriebsmittelreservoir ist bevorzugt wenigstens ein Füllstandssensor zugeordnet. Ein jeweiliger Förderkanal kann insbesondere auch mit wenigstens einem Durchflusssensor versehen sein.

Die erste und zweite Ventilanordnung können jeweils beispielsweise als Tellerventile ausgeführt sein, die z.B. über einen gemeinsamen Aktor insbesondere so betätigbar sind, dass mit einer feder- bzw. spielgeführten Hysterese mit einer jeweiligen Betätigung des Aktors zunächst eine der Ventilanordnungen schließt und danach die andere Ventilanordnung öffnet. Damit wird der Aufbau des Versorgungssystems weiter vereinfacht. Es genügt ein einfaches Umschalten des Aktors zwischen zwei Zuständen, um die gewünschte Betriebsmittelförderung zu gewährleisten.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform eines erfindungsgemäßen Systems zur Versorgung einer der Führung gegeneinander beweglicher Bauteile dienenden Lageranordnung mit einem Betriebsmittel,
- Fig. 2: eine schematische Darstellung einer weiteren beispielhaften Ausführungsform des erfindungsgemäßen Systems mit einer innerhalb des abgeschlossenen Behälters angeordneten Membran und
- Fig. 3: eine schematische Darstellung einer beispielhaften Ausführungsform einer Vakuumpumpe, deren Rotorlagerung ein Drehlager umfasst, zu dessen Versorgung das erfindungsgemäße System einsetzbar ist.

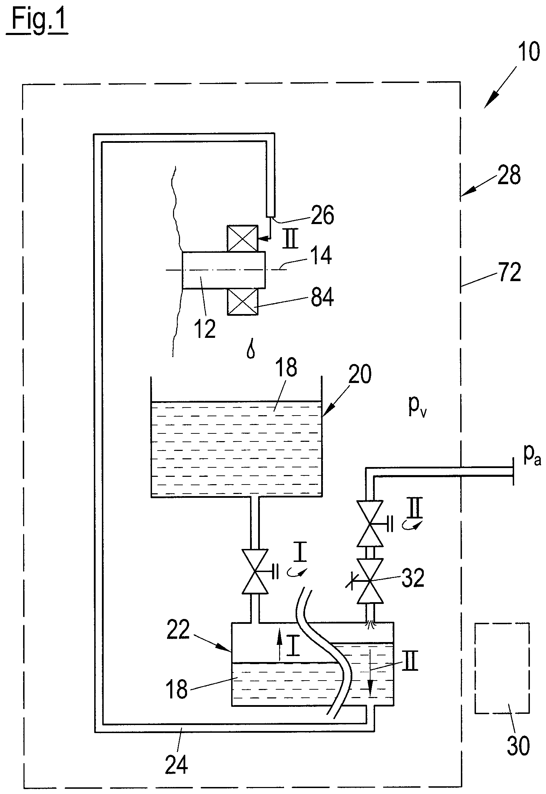

Fig. 1 zeigt in schematischer Darstellung eine beispielhafte Ausführungsform eines zur Durchführung des erfindungsgemäßen Verfahrens geeigneten Systems 10 zur Versorgung einer der Führung gegeneinander beweglicher Bauteile dienenden Lageranordnung 84 mit einem Betriebsmittel 18, insbesondere einem Schmiermittel.

Das System 10 umfasst ein Betriebsmittelreservoir 20 und wenigstens einen darunter angeordneten abgeschlossenen Behälter 22, dem über eine erste Ventilanordnung I Betriebsmittel 18 aus dem Betriebsmittelreservoir 20 zuführbar ist.

Der abgeschlossene Behälter 22 ist in einem unteren Bereich über einen insbesondere aufsteigenden Förderkanal 24 mit der Lageranordnung 84 verbunden. Dem abgeschlossenen Behälter 22 ist über eine zweite Ventilanordnung II extern beaufschlagtes Gas und/oder Umgebungsluft zuführbar, um Betriebsmittel 18 aus dem abgeschlossenen Behälter 22 über den Förderkanal 24 unterstützt durch den Differenzdruck zwischen dem dem Behälter 22 zugeführten Gas bzw. Umgebungsluft und einem insbesondere unter Unterdruck stehenden lagerseitigen Mündungsbereich 26 des Förderkanals 24 zu der Lageranordnung 84 zu fördern.

Dabei ist die Lageranordnung in einer unter Unterdruck stehenden Einrichtung 28 enthalten, bei der es sich, wie weiter unten im Einzelnen näher beschrieben wird, beispielsweise um eine Pumpe, insbesondere Vakuumpumpe, handeln kann.

Die Einrichtung 28 umfasst ein Gehäuse 72, in dem insbesondere auch die Lageranordnung 84 enthalten ist, Zudem können auch das Betriebsmittelreservoir 20 sowie der abgeschlossene Behälter 22 innerhalb dieses Gehäuses 72 angeordnet sein.

Das dem abgeschlossenen Behälter 22 über die zweite Ventilanordnung II zuführbare extern beaufschlagte Gas bzw. die dem Behälter 22 zuführbare Umgebungsluft besitzt einen Druck pₐ, während innerhalb des Gehäuses 72 ein Unterdruck pᵥ vorherrscht, der geringer ist als der Druck pₐ. Die Druckdifferenz, durch die die Betriebsmittelförderung zu der Lageranordnung 84 unterstützt wird, ergibt sich also aus der Differenz zwischen den beiden Drücken pₐ und pᵥ.

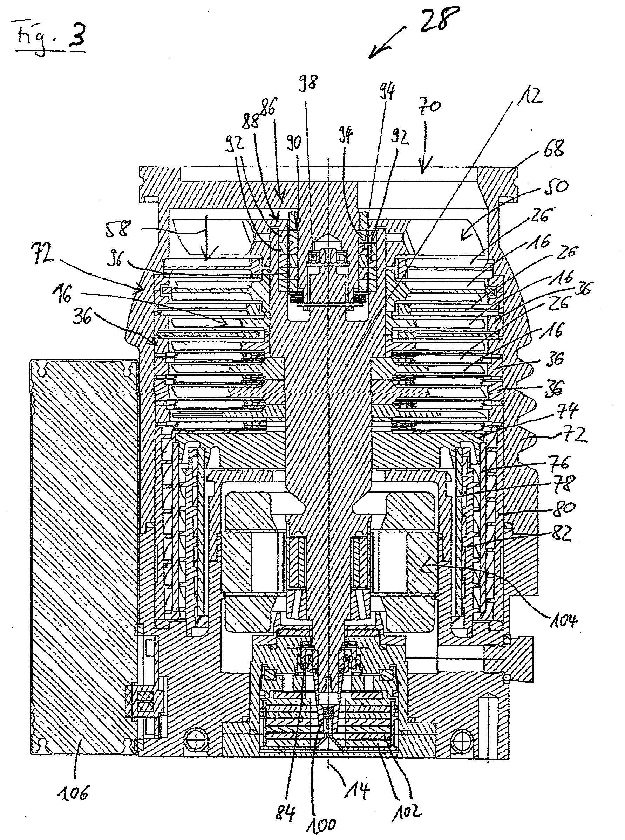

Der der Lageranordnung 84 zugeführte Betriebsmittelstrom ist über die Gas- und/oder Umgebungsluftzufuhr in den abgeschlossenen Behälter 22 steuerbar und/oder regelbar. Dazu kann das System 10 eine Steuereinrichtung 30 umfassen, über die die Ventilanordnungen I, II entsprechend ansteuerbar sind. Diese Steuereinrichtung 30 kann in einer der Einrichtung 28 zugeordneten Steuereinheit 106 (vgl. auch Fig. 3) integriert oder auch getrennt von dieser vorgesehen sein.

Die Gas- und/oder Umgebungsluftzufuhr in den abgeschlossenen Behälter 22 kann insbesondere über ein Drosselventil 32 in der gewünschten Weise einstellbar sein. Beim vorliegenden Ausführungsbeispiel ist dieses Drosselventil 32 in Strömungsrichtung des Gases bzw. der Umgebungsluft betrachtet hinter der zweiten Ventilanordnung II angeordnet.

Die erste und die zweite Ventilanordnung I, II sind insbesondere wieder über die Steuereinrichtung 30 so ansteuerbar, dass abwechselnd Betriebsmittel 18 aus dem Betriebsmittelreservoir 20 in den darunter angeordneten abgeschlossenen Behälter 22 überführt und dem abgeschlossenen Behälter extern beaufschlagtes Gas und/oder Umgebungsluft zugeführt wird, um Betriebsmittel 18 aus dem abgeschlossenen Behälter 22 zu der Lageranordnung 84 zu fördern.

Das Kanalvolumen zu der zu versorgenden Lageranordnung 84 kann insbesondere kleiner sein als das Volumen des abgeschlossenen Behälters 22, um sicherzustellen, dass auch ein leerer Kanal 24 vollständig durchströmt werden kann.

Alternativ oder zusätzlich kann der Kanal 24 an beliebiger Stelle ein Rückschlagventil aufweisen, um einen ungewollten Rückfluss von Betriebsmittel 18 zu verhindern.

Sollen über das System 10 mehrere Lageranordnungen 84 versorgt werden, so kann der abgeschlossene Behälter 22 auch über mehrere getrennte Förderkanäle 24 mit den verschiedenen Lageranordnungen 84 verbunden sein.

Einem jeweiligen Förderkanal 24 kann ein insbesondere einstellbares Drosselventil zugeordnet sein, so dass die Volumenflüsse unabhängig von den unterschiedlichen Kanalgeometrien möglichst gleich oder in einem gewünschten Verhältnis relativ zueinander gehalten werden können.

Der Lageranordnung 84 kann auch Betriebsmittel 18 abwechselnd über getrennte abgeschlossene Behälter 22 zugeführt werden. Eine solche Versorgung über mehrere abgeschlossene Behälter 22 ermöglicht eine kontinuierliche Betriebsmittelversorgung ohne Unterbrechung, indem die Behälter 22 gegenläufig getaktet werden. Damit ist sichergestellt, dass die Versorgung stets über zumindest einen Behälter 22 erfolgt.

Einem jeweiligen abgeschlossenen Behälter 22 kann auch wenigstens ein Füllstandssensor zugeordnet sein, um den jeweiligen Füllstand zu überwachen. Ein solcher Füllstandssensor kann insbesondere wieder mit der Steuereinrichtung 30 verbunden sein, um den Füllstand in der gewünschten Weise zu steuern und/oder zu regeln.

Einem jeweiligen Förderkanal 24 kann auch wenigstens ein Durchflusssensor zugeordnet sein. Auch ein solcher Durchflusssensor kann insbesondere wieder mit der Steuereinrichtung 30 verbunden sein, um über diese die der Lageranordnung 84 zugeführte Betriebsmittelmenge zu steuern und/oder zu regeln.

Die beiden Ventilanordnungen I, II können jeweils ein Tellerventil umfassen. Dabei kann diesen Tellerventilen beispielsweise ein gemeinsamer Aktor zugeordnet sein, über den die Ventilanordnungen insbesondere so steuerbar sind, dass mit einer feder- bzw. spielgeführten Hysterese bei einer Bewegung des Aktors zunächst eine der beiden Ventilanordnungen I, III schließt und anschließend die andere Ventilanordnung öffnet, was eine weitere Vereinfachung des Systems 10 mit sich bringt. So muss der betreffende Aktor lediglich zwischen zwei Zuständen hin und her geschaltet werden, um die gewünschte Förderung zu bewerkstelligen.

Insbesondere in dem Fall, dass das extern beaufschlagte Gas innerhalb des abgeschlossenen Behälters 22 mit dem Betriebsmittel 18 in Kontakt kommt, kann als Gas ein Inertgas verwendet werden.

Während bei der in Fig. 1 dargestellten Ausführungsform das Drosselventil 32 in Strömungsrichtung des dem abgeschlossenen Behälter 22 zugeführten Gases bzw. Umgebungsluft hinter der zweiten Ventilanordnung II angeordnet ist, sind grundsätzlich auch Ausführungen denkbar, bei denen dieses Drosselventil 32 vor der zweiten Ventilanordnung II angeordnet ist.

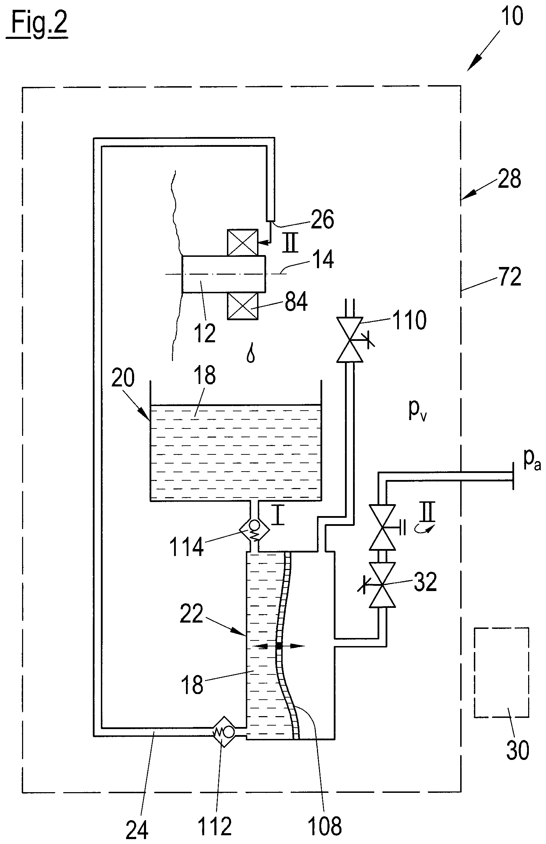

Fig. 2 zeigt in schematischer Darstellung eine weitere beispielhafte Ausführungsform des erfindungsgemäßen Systems 10, bei der innerhalb des abgeschlossenen Behälters 22 eine Membran 108 vorgesehen ist, durch die das Betriebsmittel 18 und das Gas bzw. Umgebungsluft voneinander getrennt sind.

Der mit Gas bzw. Umgebungsluft beaufschlagbare Bereich des abgeschlossenen Behälters 22 ist im vorliegenden Fall über ein insbesondere einstellbares Drosselventil 110 mit dem Innern des Gehäuses 72 verbunden, in dem Unterdruck pᵥ vorherrscht, der geringer ist als der Druck pₐ außerhalb des Gehäuses 72.

Zudem ist im Förderkanal 24 ein Rückschlagventil 112 vorgesehen. Auch die erste Ventilanordnung I umfasst im vorliegenden Fall ein Rückschlagventil 114.

Die Membran 108 kann demnach nach Art einer Membranpumpe mit im Förderkanal 24 sowie zwischen dem Betriebsmittelreservoir 20 und dem abgeschlossenen Behälter 22 vorgesehenen Rückschlagventilen 112, 114 betätigt werden. Für die Zufuhr von extern beaufschlagtem Gas bzw. Umgebungsluft in den abgeschlossenen Behälter 22 genügt im einfachsten Fall ein Ventil. Das Drosselventil 110 kann so eingestellt werden, dass stets ein definierter Gasvolumenstrom aus dem abgeschlossenen Behälter 22 austritt, der kleiner ist als der in den Behälter 22 eintretende Volumenstrom. Damit erhöht sich der Druck auf der Gasseite der Membran 108, wodurch das Betriebsmittel 18 entgegen dem Rückhaltedruck des dem Förderkanal 24 zugeordneten Rückschlagventils 112 in den Förderkanal 24 und über diesen zur Lageranordnung 84 gepumpt wird. Ein Rückfluss von Betriebsmittel 18 in das Betriebsmittelreservoir 20 wird durch das Rückschlagventil 114 verhindert. Sobald das Ventil der zweiten Ventilanordnung II geschlossen wird, wird der verbleibende Druck über das den abgeschlossenen Behälter 22 mit dem Unterdruck pᵥ verbindende Drosselventil 110 abgebaut.

Die Membran 108 kann allein durch deren Eigenspannung zurückbewegt und/oder durch eine Federeinrichtung wieder zurückgestellt werden. Während des entsprechenden Rückhubs der Membran 108 wird erneut Betriebsmittel 18 aus dem Betriebsmittelreservoir 20 in den abgeschlossenen Behälter 22 gesaugt, das dann für die nächste Pumpphase zur Verfügung steht.

Im Übrigen kann dieses in Fig. 2 dargestellte System insbesondere wieder so ausgeführt sein wie das anhand der Fig. 1 beschriebene System. Einander entsprechenden Teilen sind gleiche Bezugszeichen zugeordnet.

Wie bereits erwähnt, kann das erfindungsgemäße System 10 insbesondere zur Betriebsmittelversorgung einer Lageranordnung 84 vorgesehen sein, die Teil einer Rotorlagerung einer Einrichtung 28 wie beispielsweise einer Vakuumpumpe ist.

In der Fig. 3 ist in schematischer Darstellung eine beispielhafte Ausführungsform einer solchen Vakuumpumpe gezeigt, deren Rotorlagerung eine als Drehlager ausgeführte Lageranordnung 84 umfasst, zu deren Versorgung das erfindungsgemäße System 10 einsetzbar ist.

Die in Fig. 3 gezeigte Vakuumpumpe umfasst einen von einem Einlassflansch 68 umgebenen Pumpeneinlass 70 sowie mehrere Pumpstufen zur Förderung des an dem Pumpeneinlass 70 anstehenden Gases zu einem in Fig. 3 nicht dargestellten Pumpenauslass. Die Vakuumpumpe umfasst einen Stator mit einem statischen Gehäuse 72 und einen in dem Gehäuse 72 angeordneten Rotor mit einer um eine Rotationsachse 14 drehbar gelagerten Rotorwelle 12.

Die Vakuumpumpe ist als Turbomolekularpumpe ausgebildet und umfasst mehrere pumpwirksam miteinander in Serie geschaltete turbomolekulare Pumpstufen mit mehreren mit der Rotorwelle 12 verbundenen turbomolekularen Rotorscheiben 16 und mehreren in axialer Richtung zwischen den Rotorscheiben 16 angeordneten und in dem Gehäuse 72 festgelegten turbomolekularen Statorscheiben 26, die durch Distanzringe 36 in einem gewünschten axialen Abstand zueinander gehalten sind. Die Rotorscheiben 16 und Statorscheiben 26 stellen in dem Schöpfbereich 50 eine in Richtung des Pfeils 58 gerichtete axiale Pumpwirkung bereit.

Die Vakuumpumpe umfasst außerdem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 12 verbundene Rotornabe 74 und zwei an der Rotornabe 74 befestigte und von dieser getragene zylindermantelförmige Holweck-Rotorhülsen 76, 78, die koaxial zu der Rotationsachse 14 orientiert und in radialer Richtung ineinander geschachtelt sind. Ferner sind zwei zylindermantelförmige Holweck-Statorhülsen 80, 82 vorgesehen, die ebenfalls koaxial zu der Rotationsachse 14 orientiert und in radialer Richtung ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen jeweils einer Holweck-Rotorhülse 76, 78 und einer Holweck-Statorhülse 80, 82 gebildet. Dabei ist jeweils eine der pumpaktiven Oberflächen glatt ausgebildet - vorliegend diejenige der Holweck-Rotorhülse 76 bzw. 78 - und die gegenüberliegende pumpaktive Oberfläche der Holweck-Statorhülse 80, 82 weist eine Strukturierung mit schraubenlinienförmig um die Rotationsachse 14 herum in axialer Richtung verlaufenden Nuten auf, in denen durch die Rotation des Rotors das Gas vorangetrieben und dadurch gepumpt wird.

Die Vakuumpumpe umfasst einen Antriebsmotor 104 zum drehenden Antreiben des Rotors, dessen Läufer durch die Rotorwelle 12 gebildet ist. Eine Steuereinheit 106 steuert den Motor 104 an.

Die drehbare Lagerung der Rotorwelle 12 wird durch ein als Wälzlager ausgebildetes Drehlager 84 im Bereich des Pumpenauslasses und ein Permanentmagnetlager 86 im Bereich des Pumpeneinlasses 70 bewirkt.

Das Permanentmagnetlager 86 umfasst eine rotorseitige Lagerhälfte 88 und eine statorseitige Lagerhälfte 90, welche jeweils einen Ringstapel aus mehreren in axialer Richtung aufeinandergestapelten permanentmagnetischen Ringen 92, 94 umfassen, wobei sich die Magnetringe 92, 94 unter Ausbildung eines radialen Lagerspalts 96 gegenüberliegen.

Innerhalb des Magnetlagers 86 ist ein Not- bzw. Fanglager 98 vorgesehen, welches als ungeschmiertes Wälzlager ausgebildet ist und im normalen Betrieb der Vakuumpumpe ohne Berührung leer läuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Das Drehlager 84 wird mit einem Betriebsmittel, wie etwa einem Schmiermittel, versorgt. Dabei kann, wie Fig. 3 zeigt, im Bereich des Drehlagers 84 an der Rotorwelle 12 eine konische Spritzmutter 100 mit einem zu dem Drehlagers 84 hin zunehmenden Außendurchmesser vorgesehen sein, die mit zumindest einem Abstreifer eines mehrere mit einem Betriebsmittel, wie zum Beispiel einem Schmiermittel, getränkte saugfähige Scheiben 102 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 100 übertragen und infolge der Zentrifugalkraft entlang der Spritzmutter 100 in Richtung des größer werdenden Außendurchmessers der Spritzmutter 100 zu dem Drehlager 84 hin gefördert, wo es zum Beispiel eine schmierende Funktion erfüllt.

Die Steuereinrichtung 30 des erfindungsgemäßen Systems 10 kann in der Steuereinheit 106 dieser Vakuumpumpe integriert oder auch getrennt davon vorgesehen sein. Die über das erfindungsgemäße System 2 mit Betriebsmittel 18 versorgte Lageranordnung 84 ist innerhalb des Gehäuses 72 der Vakuumpumpe angeordnet, in der ein Unterdruck vorherrscht. Innerhalb dieses Gehäuses 72 der Vakuumpumpe können insbesondere auch das Betriebsmittelreservoir 20 sowie der abgeschlossene Behälter 22 des erfindungsgemäßen Systems 10 vorgesehen sein.

### Bezugszeichenliste

- 10: System
- 12: Rotorwelle
- 14: Rotationsachse
- 16: Rotorscheibe
- 18: Betriebsmittel
- 20: Betriebsmittelreservoir
- 22: abgeschlossener Behälter
- 24: Förderkanal
- 26: lagerseitiger Mündungsbereich
- 28: Einrichtung
- 30: Steuereinrichtung
- 32: Drosselventil
- 36: Distanzring
- 50: Schöpfbereich
- 58: Pfeil
- 68: Einlassflansch
- 70: Pumpeneinlass
- 72: Gehäuse
- 74: Rotornabe
- 76, 78: Holweck-Rotorhülse
- 80, 82: Holweck-Statorhülse
- 84: Lageranordnung, Drehlager
- 86: Permanentmagnetlager
- 88: rotorseitige Lagerhälfte
- 90: statorseitige Lagerhälfte
- 92, 94: permanentmagnetischer Ring
- 96: radialer Lagerspalt
- 98: Fanglager
- 100: Spritzmutter
- 102: saugfähige Scheibe
- 104: Antriebsmotor
- 106: Steuereinheit
- 108: Membran
- 110: Drosselventil
- 112: Rückschlagventil
- 114: Rückschlagventil

- I: erste Ventilanordnung
- II: zweite Ventilanordnung
- pₐ: Druck des zugeführten Inertgases/Umgebungsluft
- pᵥ: Druck innerhalb des Gehäuses

## Patentansprüche

1. Verfahren zur Versorgung wenigstens einer der Führung gegeneinander beweglicher Bauteile dienenden Lageranordnung (84) mit einem Betriebsmittel (18), insbesondere einem Schmiermittel, bei dem das Betriebsmittel (18) aus einem Betriebsmittelreservoir (20) über eine erste Ventilanordnung (I) in wenigstens einen darunter angeordneten abgeschlossenen Behälter (22) geleitet wird, der abgeschlossene Behälter (22) über einen Förderkanal (24) mit der Lageranordnung (84) verbunden wird und dem abgeschlossenen Behälter (22) über eine zweite Ventilanordnung (II) extern beaufschlagtes Gas und/oder Umgebungsluft zugeführt wird, um Betriebsmittel (18) aus dem abgeschlossenen Behälter (22) über den Förderkanal (24) unterstützt durch den Differenzdruck zwischen dem dem Behälter (22) zugeführten Gas bzw. Umgebungsluft und einem unter Unterdruck stehenden lagerseitigen Mündungsbereich (26) des Förderkanals (24) zu der Lageranordnung (84) zu fördern, wobei mit dem Betriebsmittel (18) eine Lageranordnung (84) einer unter Unterdruck stehenden Vakuumpumpe (28) versorgt wird.

2. Verfahren nach Anspruch 1,
**dadurch gekennzeichnet, dass** der der Lageranordnung (84) zugeführte Betriebsmittelstrom über die Gas- und/oder Umgebungsluftzufuhr in den abgeschlossenen Behälter (22) gesteuert und/oder geregelt wird.

3. Verfahren nach Anspruch 2,
**dadurch gekennzeichnet, dass** die Gas- und/oder Umgebungsluftzufuhr in den abgeschlossenen Behälter (22) mittels eines Drosselventils (32) eingestellt wird.

4. Verfahren nach zumindest einem der vorstehenden Ansprüche,
**dadurch gekennzeichnet, dass** über die erste und die zweite Ventilanordnung (I, II) abwechselnd Betriebsmittel (18) aus dem Betriebsmittelreservoir (20) in den darunter angeordneten abgeschlossenen Behälter (22) geleitet und dem abgeschlossenen Behälter (22) extern beaufschlagtes Gas und/oder Umgebungsluft zugeführt wird, um Betriebsmittel (18) aus dem abgeschlossenen Behälter (22) zu der Lageranordnung (84) zu fördern.

5. Verfahren nach einem der Ansprüche 1 bis 3,
**dadurch gekennzeichnet, dass** das Betriebsmittel (18) und das Gas bzw. Umgebungsluft innerhalb des abgeschlossenen Behälters (22) mittels einer Membran (108) voneinander getrennt werden.

6. Vakuumpumpe (28), insbesondere Turbomolekularpumpe,
mit zumindest einer im Pumpbetrieb rotierende Teile wenigstens einer Pumpstufe, insbesondere Turbopumpstufe, tragenden und mittels eines Antriebs (104) in Rotation versetzbaren Rotorwelle (12), die durch eine wenigstens ein Wälzlager (84) umfassende Lageranordnung (84) drehbar gelagert ist, wobei zur Versorgung der Lageranordnung (84) mit einem Betriebsmittel (18), insbesondere einem Schmiermittel, ein System (10) mit einem Betriebsmittelreservoir (20) und wenigstens einem darunter angeordneten abgeschlossenen Behälter (22) vorgesehen ist, dem über eine erste Ventilanordnung (I) das Betriebsmittel (18) aus dem Betriebsmittelreservoir (20) zuführbar ist, wobei der abgeschlossene Behälter (22) über einen Förderkanal (24) mit der Lageranordnung (84) verbunden ist und dem abgeschlossenen Behälter (22) über eine zweite Ventilanordnung (II) extern beaufschlagtes Gas und/oder Umgebungsluft zuführbar ist, um Betriebsmittel (18) aus dem abgeschlossenen Behälter (22) über den Förderkanal (24) unterstützt durch den Differenzdruck zwischen dem dem Behälter (22) zugeführten Gas bzw. Umgebungsluft und einem unter Unterdruck stehenden lagerseitigen Mündungsbereich (26) des Förderkanals (24) zu der Lageranordnung (84) zu fördern.

7. Vakuumpumpe nach Anspruch 6,
**dadurch gekennzeichnet, dass** die Lageranordnung (84) in der unter Unterdruck stehenden Vakuumpumpe (28), bevorzugt Turbomolekularpumpe, enthalten ist.

8. Vakuumpumpe nach Anspruch 6 oder 7,
**dadurch gekennzeichnet, dass** die Lageranordnung (84) wenigstens ein in der Vakuumpumpe (28), insbesondere Turbomolekularpumpe, integriertes Wälzlager umfasst, durch welches eine im Pumpbetrieb rotierende Teile wenigstens einer Pumpstufe, insbesondere Turbopumpstufe, tragende und mittels eines Antriebs (104) in Rotation versetzbare Rotorwelle (12) drehbar gelagert ist.

9. Vakuumpumpe nach einem der Ansprüche 6 bis 8,
**dadurch gekennzeichnet, dass** der der Lageranordnung (84) zugeführte Betriebsmittelstrom über die Gas- und/oder Umgebungsluftzufuhr in den abgeschlossenen Behälter (22) steuerbar und/oder regelbar ist, wobei insbesondere die Gas- und/oder Umgebungsluftzufuhr in den abgeschlossenen Behälter (22) über ein Drosselventil (32) einstellbar ist.

10. Vakuumpumpe nach einem der Ansprüche 6 bis 9,
**dadurch gekennzeichnet, dass** die erste und die zweite Ventilanordnung (I, II) über eine Steuereinrichtung (30) so ansteuerbar sind, dass abwechselnd Betriebsmittel (18) aus dem Betriebsmittelreservoir (20) in den darunter angeordneten abgeschlossenen Behälter (22) überführt und dem abgeschlossenen Behälter (22) extern beaufschlagtes Gas und/oder Umgebungsluft zugeführt wird, um Betriebsmittel (18) aus dem abgeschlossenen Behälter (22) zu der Lageranordnung (84) zu fördern.

11. Vakuumpumpe nach einem der Ansprüche 6 bis 9, **dadurch gekennzeichnet, dass** innerhalb des abgeschlossenen Behälters (22) eine Membran (108) vorgesehen ist, durch die das Betriebsmittel (18) und das Gas bzw. Umgebungsluft voneinander getrennt sind.

12. Vakuumpumpe nach einem der Ansprüche 6 bis 11,
**dadurch gekennzeichnet, dass** der mit Gas bzw. Umgebungsluft beaufschlagbare Bereich des abgeschlossenen Behälters (22) über ein insbesondere einstellbares Drosselventil (110) mit Unterdruck beaufschlagbar ist.

13. Vakuumpumpe nach einem der Ansprüche 6 bis 12,
**dadurch gekennzeichnet, dass** dem Förderkanal (24) ein Rückschlagventil (112) zugeordnet ist, und/oder dass dem abgeschlossenen Behälter (22) wenigstens ein Füllstandssensor zugeordnet ist.

## Claims

1. A method of supplying at least one bearing arrangement (84), serving to guide components movable with respect to one another, with an operating medium (18), in particular with a lubricant, in which the operating medium (18) is conducted from an operating medium reservoir (20) via a first valve arrangement (I) into at least one closed container (22) arranged therebeneath; in which the closed container (22) is connected to the bearing arrangement (84) via a conveying passage (24); and in which externally charged gas and/or environmental air is/are supplied to the closed container (22) via a second valve arrangement (II) to convey operating medium (18) from the closed container (22) via the conveying passage (24) to the bearing arrangement (84), assisted by the differential pressure between the gas or environmental air supplied to the container (22) and a bearing-side opening region (26) of the conveying passage (24) subject to a vacuum, wherein a bearing arrangement (84) of a vacuum pump (28) subject to a vacuum is supplied with the operating medium (18).

2. A method in accordance with claim 1,
**characterized in that** the operating medium flow supplied to the bearing arrangement (84) is controlled and/or regulated via the gas and/or environmental air supply into the closed container (22).

3. A method in accordance with claim 2,
**characterized in that** the gas and/or environmental air supply into the closed container (22) is set by means of a throttle valve (32).

4. A method in accordance with at least one of the preceding claims,
**characterized in that** operating medium (18) is alternately conducted via the first and second valve arrangements (I, II) from the operating medium reservoir (20) into the closed container (22) arranged therebeneath; and **in that** externally charged gas and/or environmental air is/are supplied to the closed container (22) to convey operating medium (18) from the closed container (22) to the bearing arrangement (84).

5. A method in accordance with any one of the claims 1 to 3,
**characterized in that** the operating medium (18) and the gas or environmental air are separated from one another within the closed container (22) by means of a membrane (108).

6. A vacuum pump (28), in particular a turbomolecular pump,
comprising at least one rotor shaft (12) which supports parts of at least one pump stage, in particular of a turbomolecular pump stage, rotating in pump operation, which can be set into rotation by means of a drive (104) and which is rotatably supported by a bearing arrangement (84) comprising at least one rolling element bearing (84), wherein a system (10) is provided to supply the bearing arrangement (84) with an operating medium (18), in particular with a lubricant, said system (10) comprising an operating medium reservoir (20) and at least one closed container (22) which is arranged therebeneath and to which the operating medium (18) can be supplied from the operating medium reservoir (20) via a first valve arrangement (I); wherein the closed container (22) is connected to the bearing arrangement (84) via a conveying passage (24); and wherein externally charged gas and/or environmental air can be supplied to the closed container (22) via a second valve arrangement (II) to convey operating medium (18) from the closed container (22) via the conveying passage (24) to the bearing arrangement (84), assisted by the differential pressure between the gas or environmental air supplied to the container (22) and a bearing-side opening region (26) of the conveying passage (24) subject to a vacuum.

7. A vacuum pump in accordance with claim 6,
**characterized in that** the bearing arrangement (84) is included in the vacuum pump (28) subject to a vacuum, preferably in a turbomolecular pump.

8. A vacuum pump in accordance with claim 6 or claim 7,
**characterized in that** the bearing arrangement (84) comprises at least one rolling element bearing which is integrated in the vacuum pump (28), in particular in a turbomolecular pump, and by which a rotor shaft (12) is rotatably supported, which rotor shaft (12) supports parts of at least one pump stage, in particular of a turbomolecular pump stage, rotating in pump operation and can be set into rotation by means of a drive (104).

9. A vacuum pump in accordance with any one of the claims 6 to 8,
**characterized in that** the operating medium flow supplied to the bearing arrangement (84) can be controlled and/or regulated via the gas and/or environmental air supply into the closed container (22), with in particular the gas and/or environmental air supply into the closed container (22) being settable via a throttle valve (32).

10. A vacuum pump in accordance with any one of the claims 6 to 9,
**characterized in that** the first and second valve arrangements (I, II) are controllable via a control device (30) such that operating medium (18) is alternately transferred from the operating medium reservoir (20) into the closed container (22) arranged therebeneath and externally charged gas and/or environmental air is/are supplied to the closed container (22) to convey operating medium (18) from the closed container (22) to the bearing arrangement (84).

11. A vacuum pump in accordance with any one of the claims 6 to 9, **characterized in that** a membrane (108) by which the operating medium (18) and the gas or environmental air are separated from one another is provided within the closed container (22).

12. A vacuum pump in accordance with any one of the claims 6 to 11, **characterized in that** the region of the closed container (22) which can be acted on by gas or environmental air can be acted on by a vacuum via a throttle valve (110) which is in particular settable.

13. A vacuum pump in accordance with any one of the claims 6 to 12, **characterized in that** a check valve (112) is associated with the conveying passage (24); and/or **in that** at least one filling level sensor is associated with the closed container (22).

## Revendications

1. Procédé pour alimenter en fluide de travail (18), en particulier en lubrifiant, au moins un ensemble de palier (84) servant au guidage de composants mobiles les uns par rapport aux autres, dans lequel le fluide de travail (18) est amené depuis un réservoir à fluide de travail (20), par l'intermédiaire d'un premier ensemble de vanne (I), dans au moins un récipient scellé (22) disposé en dessous, le récipient scellé (22) est relié à l'ensemble de palier (84) par l'intermédiaire d'un canal de transport (24), et du gaz et/ou de l'air ambiant sollicité par voie externe est amené au récipient scellé (22) par l'intermédiaire d'un deuxième ensemble de vanne (II), afin de transporter le fluide de travail (18) depuis le récipient scellé (22) jusqu'à l'ensemble de palier (84) par l'intermédiaire du canal de transport (24), à l'aide de la pression différentielle entre le gaz ou l'air ambiant amené au récipient (22) et une zone d'embouchure (26) du canal de transport (24) côté palier, qui est soumise à une dépression, ledit fluide de travail (18) servant à alimenter un ensemble de palier (84) d'une pompe à vide (28) sous dépression.

2. Procédé selon la revendication 1,
**caractérisé en ce que**
le flux de fluide de travail amené à l'ensemble de palier (84) est commandé et/ou régulé par l'amenée de gaz et/ou d'air ambiant dans le récipient scellé (22).

3. Procédé selon la revendication 2,
**caractérisé en ce que**
l'amenée de gaz et/ou d'air ambiant dans le récipient scellé (22) est réglée au moyen d'une vanne d'étranglement (32).

4. Procédé selon l'une au moins des revendications précédentes,
**caractérisé en ce que**
le fluide de travail (18) est amené via le premier et le deuxième ensemble de vanne (I, II) depuis le réservoir à fluide de travail (20) jusque dans le récipient scellé (22) disposé en dessous, et du gaz et/ou de l'air ambiant sollicité par voie externe est amené au récipient scellé (22), en alternance, afin de transporter le fluide de travail (18) hors du récipient scellé (22) jusqu'à l'ensemble de palier (84).

5. Procédé selon l'une des revendications 1 à 3,
**caractérisé en ce que**
à l'intérieur du récipient scellé (22), le fluide de travail (18) et le gaz ou l'air ambiant sont séparés l'un de l'autre par une membrane (108).

6. Pompe à vide (28), en particulier pompe turbomoléculaire, comportant au moins un arbre de rotor (12) qui porte des parties rotatives pendant le fonctionnement de pompage d'au moins un étage de pompe, en particulier d'un étage de turbopompe, et qui peut être mis en rotation au moyen d'un entraînement (104), et qui est monté de façon mobile en rotation par un ensemble de palier (84) comprenant au moins un palier à roulement (84), dans laquelle
un système (10) comportant un réservoir à fluide de travail (20) et au moins un récipient scellé (22) disposé en dessous est prévu pour alimenter l'ensemble de palier (84) en fluide de travail (18), en particulier en lubrifiant, récipient auquel le fluide de travail (18) peut être amené à partir du réservoir à fluide de travail (20) par l'intermédiaire d'un premier ensemble de vanne (I), le récipient scellé (22) est relié à l'ensemble de palier (84) par l'intermédiaire d'un canal de transport (24), et
du gaz et/ou de l'air ambiant sollicité par voie externe peut être amené au récipient scellé (22) par l'intermédiaire d'un second ensemble de vanne (II), afin de transporter le fluide de travail (18) depuis le récipient scellé (22) jusqu'à l'ensemble de palier (84) par l'intermédiaire du canal de transport (24), à l'aide de la pression différentielle entre le gaz ou l'air ambiant amené au récipient (22) et une zone d'embouchure (26) du canal de transport (24) côté palier qui est soumise à une dépression.

7. Pompe à vide selon la revendication 6,
**caractérisée en ce que**
l'ensemble de palier (84) est contenu dans la pompe à vide (28), de préférence dans la pompe turbomoléculaire, qui est sous dépression.

8. Pompe à vide selon la revendication 6 ou 7,
**caractérisée en ce que**
l'ensemble de palier (84) comprend au moins un palier à roulement intégré dans la pompe à vide (28), en particulier dans la pompe turbomoléculaire, au moyen duquel un arbre de rotor (12) qui porte des parties rotatives pendant le fonctionnement de pompage d'au moins un étage de pompe, en particulier d'un étage de turbopompe, et qui peut être mis en rotation au moyen d'un entraînement (104), est monté de façon mobile en rotation.

9. Pompe à vide selon l'une des revendications 6 à 8,
**caractérisée en ce que**
le flux de fluide de travail amené à l'ensemble de palier (84) peut être commandé et/ou régulé par l'amenée de gaz et/ou d'air ambiant dans le récipient scellé (22), et en particulier l'amenée de gaz et/ou d'air ambiant dans le récipient scellé (22) est réglable au moyen d'une vanne d'étranglement (32).

10. Pompe à vide selon l'une des revendications 6 à 9,
**caractérisée en ce que**
le premier et le second ensemble de vanne (I, II) peuvent être pilotés par l'intermédiaire d'un moyen de pilotage (30) de telle sorte qu'en alternance le fluide de travail (18) est amené depuis le réservoir à fluide de travail (20) jusque dans le récipient scellé (22) disposé en dessous, et du gaz et/ou de l'air ambiant sollicité par voie externe est amené au récipient scellé (22), afin de transporter le fluide de travail (18) depuis le récipient scellé (22) jusqu'à l'ensemble de palier (84).

11. Pompe à vide selon l'une des revendications 6 à 9,
**caractérisée en ce que**
une membrane (108) est prévue à l'intérieur du récipient scellé (22), par laquelle le fluide de travail (18) et le gaz ou l'air ambiant sont séparés l'un de l'autre.

12. Pompe à vide selon l'une des revendications 6 à 11,
**caractérisée en ce que**
la zone du récipient scellé (22) qui peut être sollicitée par le gaz ou par l'air ambiant peut être sollicitée par une dépression par l'intermédiaire d'une vanne d'étranglement (110) en particulier réglable.

13. Pompe à vide selon l'une des revendications 6 à 12,
**caractérisée en ce que**
un clapet anti-retour (112) est associé au canal de transport (24), et/ou **en ce que**
au moins un capteur de niveau de remplissage est associé au récipient scellé (22).
